# EUROPEAN PATENT APPLICATION

(11) **EP 4 529 115 A1**
(43) Date of publication of application: **26.03.2025**
(21) Application number: 24196440.2
(22) Date of filing: 26.08.2024
(51) Int. Cl.: H04L 41/022, H04L 41/14, H04L 43/065

(54) **METHOD AND APPARATUS FOR REPORTING IN MULTIVENDOR NETWORK ENVIRONMENTS**

(30) Priority: 19.09.2023 FI 20236035
(71) Applicant: Nokia Solutions and Networks Oy, 02610 Espoo (FI)
(72) Inventor: DJUPSUND, Markus Arne Pekka, Tampere (FI); POHTO, Jussi Petteri, Tampere (FI); ESKOLA, Jari Olavi, Ylöjärvi (FI); HAUKKALA, Ville, Tampere (FI); BERG, Jyrki Petteri, Lempäälä (FI)
(74) Representative: Nokia EPO representatives

(57) **Abstract**

There is provided an apparatus, a method and a computer program product. In accordance with an embodiment the method comprises obtaining procedure data related to a vendor specific network element of a wireless communication network; determining a a third generation partnership project (3GPP) based procedure in the obtained procedure data; generating triggering from the obtained procedure data for determining the third generation partnership project based procedure; and converting the obtained procedure data to a vendor agnostic output data according to a data model.

## Description

### TECHNICAL FIELD

The present invention relates to a method and apparatus for function and system level reporting in multivendor network environments.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Currently, mobility management, session control and customer experience data in the wireless communication network (for example fourth generation (4G), fifth generation new radio (5G NR), 5G non-stand alone (NSA)) are fragmented among multiple core and radio network layers, many of them supplied by different vendors. This may lead to an uncoordinated analysis of individual network elements' key performance indicators (KPI). Hence, the result may be an incomplete picture of the full performance of the wireless communication networks. This may also apply to a future sixth generation (6G) wireless communication network.

An operator of a wireless communication network may have different network elements and radio access network (RAN) elements from different vendors. Third generation partnership project (3GPP) is not strict on how these elements send their monitoring, analyzing and/or tracing reports, wherein each vendor may use their own "dialect". This makes the reports and also the process of using the reports very complicated.

Due to mobile networks getting more complex with introduction of new mobile radio and core technologies, there is an ever-increasing need by the operators to use data for analytics purposes. An established way of acquiring data for e.g. analytics purposes is to fetch relevant data from different telecom vendor supplied network management applications meant for managing various radio and core technologies. The vendor native data sources used for analytics purposes means that data analysts need to spend significant time in harmonizing the collected data.

### SUMMARY

Some embodiments provide a method and apparatus for function and system level reporting in multivendor network environments.

A Vendor agnostic data report is defined as a result of a set of methods created for achieving uniformed reports over raw data that are provided in vendor proprietary structures from different network vendors. The methods may all be created upon 3GPP defined 5G NR, 5GNSA or 4G (fourth-generation wireless communication network) system or network function level procedures and related terminology. The vendor agnostic data reports may be done on network functions as well as on system levels. This may also apply to the future sixth generation (6G) wireless communication network.

To tackle the problem presented above, an aim is to solve the data harmonization challenge in 4G/5G NSA/5G NR by creating a set of methods to map telecom vendor specific radio and core generated report data by utilizing 3GPP standardization offered framework and combining this with native understanding of radio and core mapping.

Provided that 6G 3GPP specification follows similar type of logic as 4G/5G NSA and 5G NR specification from the point of view of radio and core system procedures, the developed methodology may also work for 6G radio and core data harmonization.

In accordance with an embodiment, as a part of the methodology, there are provided reports which are structured based upon the following principles:
A. Reports are created upon documented 3GPP procedures i.e. chapter structures in 3GPP documents;
B. Reports are organized according to 3GPP based Network architectural and Service structures;
C. Reports are triggered based upon 3GPP procedures;
D. Reports are parametrized according to 3GPP terminology (e.g. numbering, addressing and identification).

In accordance with an embodiment, for the above-mentioned principle A., report identification, a method for identification of a report is available. This has the advantage that the produced reports are directly pointing to standardized procedures of a system or system function and the used 3GPP specification document. A report identifier (ID) points to a direct location of the monitored procedure in the referred document.

For the above-mentioned principle B., report organization, a report structuring method is available. This feature has the advantage that the produced reports are organized in a top-down approach (from network level to lower level), structurized according to the same principles regardless the function using a standardized terminology with references to definitions in 3GPP specifications.

For the above-mentioned principle C., report triggers, report trigger setting methods and also system level report triggering and correlation methods are available. This feature has the advantage that the produced reports are triggered according to common signaling based upon 3GPP specifications and they provide a self-explanatory framework how different function based reports can be combined (correlated) to system level reports based upon needed use cases.

The above-mentioned principle D., report parameters, represents and visualizes examples of the outcome of the methodology.

In accordance with an embodiment, there is provided a normalized reporting scheme in which vendor specific reporting data is harmonized using 3GPP conventions based on a specification and/or a section number to produce individual data elements. Then these data elements, potentially from different vendors originally, are correlated based on standard 3GPP system procedures, e.g. user equipment (UE) initial access procedure involving E1-interface and F1-interface. When a new vendor is introduced, only the normalization may need to be introduced for the vendor.

Some embodiments are implemented in the context of the 5G communication systems and relate to UE and/or network implementation of mechanisms for monitoring and reporting network behaviour of different vendors.

According to some aspects, there is provided the subject matter of the independent claims. Some further aspects are defined in the dependent claims. The embodiments that do not fall under the scope of the claims are to be interpreted as examples useful for understanding the disclosure.

According to a first aspect there is provided an apparatus comprising at least one processor; and at least one memory including computer program code the at least one memory and the computer program code configured to, with the at least one processor, cause the apparatus to perform at least the following:
obtaining procedure data related to a vendor specific network element of a wireless communication network;
determining a third generation partnership project (3GPP) based procedure in the obtained procedure data;
generating triggering from the obtained procedure data for determining the third generation partnership project based procedure; and
converting the obtained procedure data to a vendor agnostic output data according to a data/info model.

According to a second aspect there is provided an apparatus comprising:
means for obtaining procedure data related to a vendor specific network element of a wireless communication network;
means for determining a third generation partnership project (3GPP) based procedure in the obtained procedure data;
means for generating triggering from the obtained procedure data for determining the third generation partnership project based procedure; and
means for converting the obtained procedure data to a vendor agnostic output data according to a data/info model.

According to a third aspect there is provided a method comprising:
obtaining procedure data related to a vendor specific network element of a wireless communication network;
determining a third generation partnership project (3GPP) based procedure in the obtained procedure data;
generating triggering from the obtained procedure data for determining the third generation partnership project based procedure; and
converting the obtained procedure data to a vendor agnostic output data according to a data model.

According to a fourth aspect there is provided an apparatus comprising at least one processor; and at least one memory including computer program code the at least one memory and the computer program code configured to, with the at least one processor, cause the apparatus to perform at least the following:
obtaining procedure data related to a vendor specific network element of a wireless communication network;
determining a third generation partnership project (3GPP) based procedure in the obtained procedure data;
generating triggering from the obtained procedure data for determining the third generation partnership project based procedure; and
converting the obtained procedure data to a vendor agnostic output data according to a data model.

According to a fifth aspect there is provided a computer program product comprising computer readable program code which, when executed by at least one processor; cause the apparatus to perform at least the following:
obtaining procedure data related to a vendor specific network element of a wireless communication network;
determining a third generation partnership project (3GPP) based procedure in the obtained procedure data;
generating triggering from the obtained procedure data for determining the third generation partnership project based procedure; and
converting the obtained procedure data to a vendor agnostic output data according to a data model.

According to a sixth aspect there is provided an apparatus comprising:
a first circuitry configured to obtain procedure data related to a vendor specific network element of a wireless communication network;
a second circuitry configured to determine a third generation partnership project (3GPP) based procedure in the obtained procedure data;
a third circuitry configured to generate triggering from the obtained procedure data for determining the third generation partnership project based procedure; and
a fourth circuitry configured to convert the obtained procedure data to a vendor agnostic output data according to a data/info model.

### BRIEF DESCRIPTION OF THE DRAWINGS

For a more complete understanding of example embodiments of the present invention, reference is now made to the following descriptions taken in connection with the accompanying drawings in which:
Fig. 1 shows a block diagram of one possible and non-limiting example in which the examples may be practiced;
Fig. 2A illustrates an overall architecture of 5G New Radio (NR);
Fig. 2B illustrates a non-roaming reference architecture of 5G system according to 3GPP TS 23.501 in a simplified manner;
Fig. 2C illustrates a non-roaming reference architecture of 5G system procedures according to 3GPP TS 23.501 in a simplified manner;
Fig. 2D illustrates some operational modules of different entities of 4G in a simplified manner;
Fig. 2E illustrates some operational modules of different entities of 4G and 5GNSA in a simplified manner;
Fig. 3A shows an overview of a part of a vendor agnostic data report for the session management function (SMF), in accordance with an embodiment;
Fig. 3B shows an overview of a part of a vendor agnostic data report for the access and mobility management function (AMF), in accordance with an embodiment;
Fig. 4 illustrates as a simplified block diagram of an apparatus, in accordance with an embodiment; and
Fig. 5A illustrates an example of AMF-next generation NodeB (gNB) correlation, in accordance with an embodiment;
Fig. 5B illustrates an example of correlation between Next Generation Radio Access Network (NG-RAN) and SMF reports, in accordance with an embodiment;
Fig. 6 illustrates a flow diagram of a method, in accordance with an embodiment.

### DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

It should be noted here that in this specification, the term 'base station' refers to a logical element containing logical communication system layers (e.g. L1, L2, L3). The base stations of different RATs may be implemented in the same hardware or at separate hardware. It should also be mentioned that although the expressions "each base station" and "each mobile station" or "each user equipment" may be used, these terms need not mean every existing base station, mobile station or user equipment but base stations, mobile stations or user equipment in a certain area or set. For example, each base station may mean all base stations within a certain geographical area or all base stations of an operator of a wireless communication network or a sub-set of base stations of an operator of a wireless communication network.

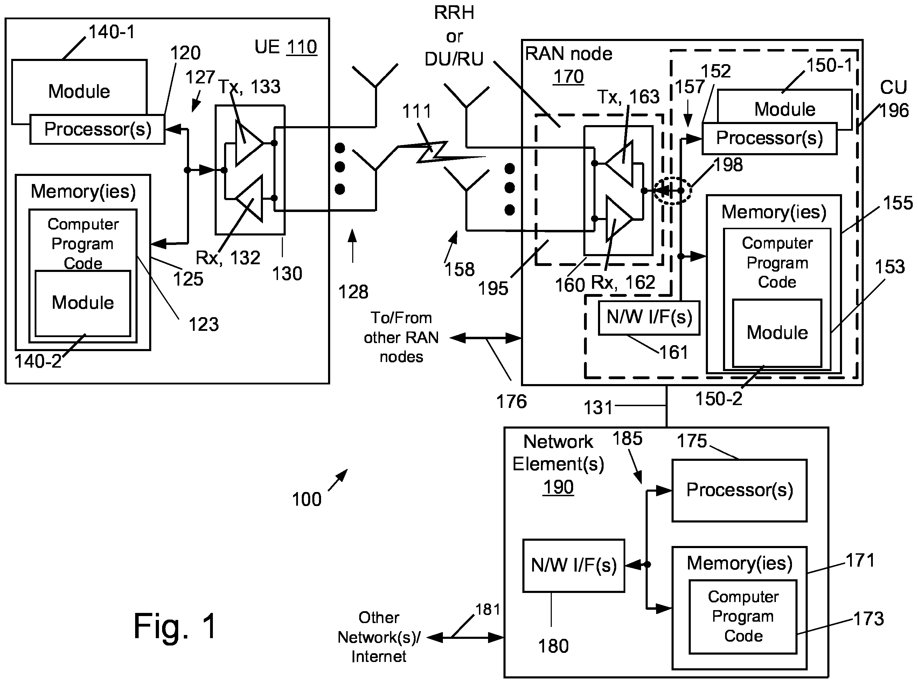

Fig. 1 shows a block diagram of one possible and non-limiting example in which the examples may be practiced. A user equipment (UE) 110, radio access network (RAN) node 170, and network element(s) 190 are illustrated. In the example of FIG. 1, the user equipment 110 is in wireless communication with a wireless network 100. A user equipment is a wireless device that can access the wireless network 100. The user equipment 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fibre optics or other optical communication equipment, and the like. The one or more transceivers 130 are connected to one or more antennas 128. The one or more memories 125 include computer program code 123. The user equipment 110 includes a module 140, which may be implemented in a number of ways. The module 140 may be implemented in hardware as module 140-1, such as being implemented as part of the one or more processors 120. The module 140-1 may also be implemented as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The user equipment 110 communicates with RAN node 170 via a wireless link 111. The modules 140-1 and 140-2 may be configured to implement the functionality of the user equipment as described herein.

The RAN node 170 in this example is a base station that provides access by wireless devices such as the user equipment 110 to the wireless network 100. Thus, the RAN node 170 (and the base station) may also be called as an access point of a wireless communication network). The RAN node 170 may be, for example, a base station for 5G, also called New Radio (NR). In 5G, the RAN node 170 may be a NG-RAN node, which is defined as either a gNB (a next generation NodeB) or an ng-eNB. A gNB is a node providing NR user plane and control plane protocol terminations towards the UE and connected via the NG interface to a 5G core network (5GC), such as, for example, the network element(s) 190. The ng-eNB is a node providing E-UTRA user plane and control plane protocol terminations towards the UE and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that controls the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell is supported by only one gNB-DU 195. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memory(ies) 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195. The modules 150-1 and 150-2 may be configured to implement the functionality of the base station described herein. Such functionality of the base station may include a location management function (LMF) implemented based on functionality of the LMF described herein. Such LMF may also be implemented within the RAN node 170 as a location management component (LMC).

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations such as functionality of an LMF as described herein. In some examples, a single LMF could serve a large region covered by hundreds of base stations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor-based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general-purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Module 150-1 and/or module 150-2 may implement the functionalities and signaling of the gNB or radio node as herein described. Computer program code 173 may implement the functionalities and signaling of the AMF or network element as herein described.

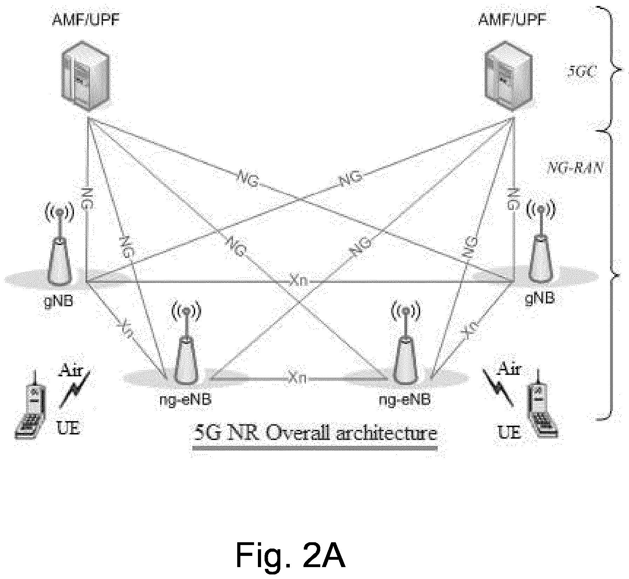

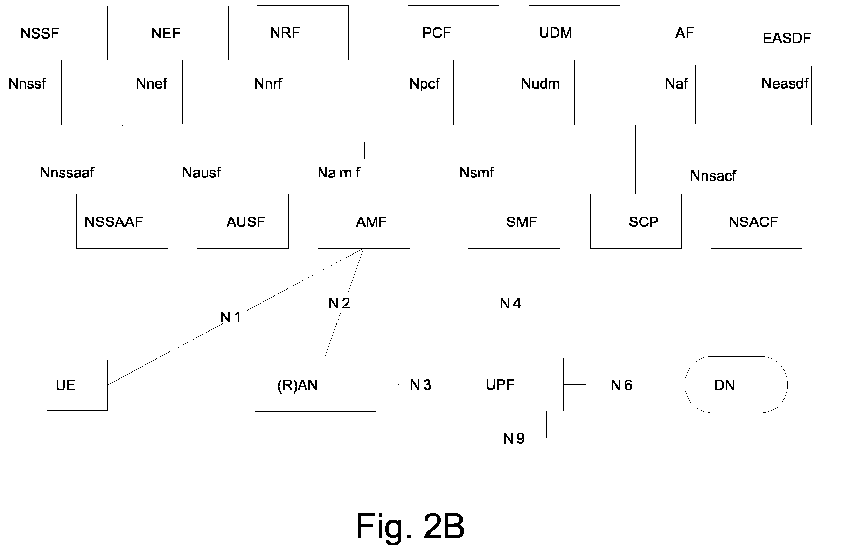

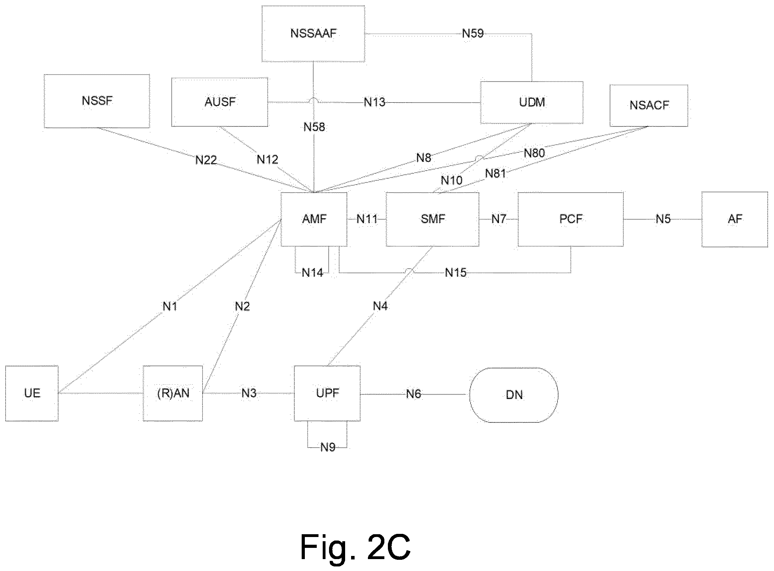

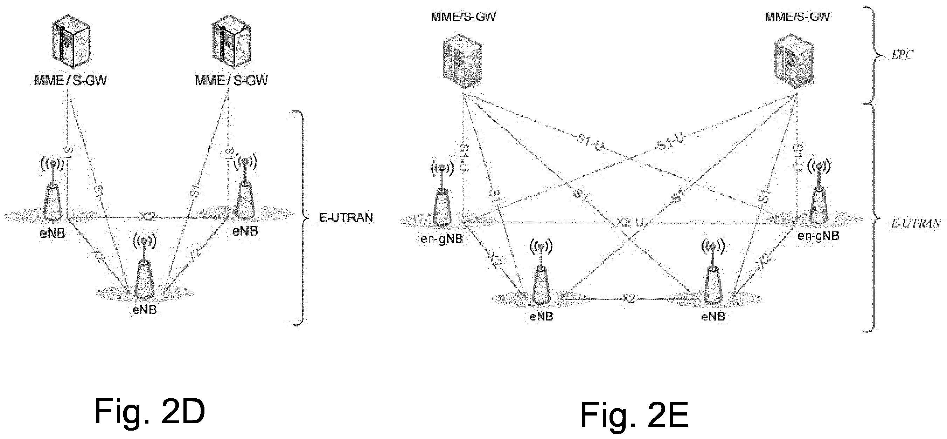

The overall architecture of 5G NR is shown in Fig. 2A as specified in 3GPP TS 38.300 specification. Fig. 2B illustrates a non-roaming reference architecture of 5G system according to 3GPP TS 23.501 in a simplified manner; and Fig. 2C illustrates a non-roaming reference architecture of 5G system procedures according to 3GPP TS 23.501 in a simplified manner. The 5G NR network comprises the 5G Core Network (5GC) and the Next Generation Radio Access Network (NG RAN). As shown in Fig. 2A, the NG-RAN comprises 5G base stations gNB and LTE base stations ng-eNB. The gNB node provides NR user plane and control plane protocol terminations towards the UE, i.e. 5G terminal device such as smartphone, tablet, laptop etc. The gNB node is connected via the NG interface to the 5GC (5G Core network). The ng-eNB node provides E-UTRA (i.e. LTE) user plane and control plane protocol terminations towards the UE, and it is connected via the NG interface to the 5GC.

The 5G NR user plane and control plane as well as 5G NR RAN architecture comprise various interfaces, such as NG, Xn and F1, and their interaction with the radio interface (Uu). 5G smartphones interact with 5G-RAN over Uu radio interface, and 5G RAN interacts with 5GC.

The protocols over Uu and NG interfaces are categorized into user plane protocols and control plane protocols. User plane protocols implement actual packet data unit/protocol data unit (PDU) Session service which carries user data through the access stratum. Control plane protocols control PDU Sessions and connection between UE and the network from various aspects which includes requesting the service, controlling different transmission resources, handover etc. The mechanism for transparent transfer of non-access stratum (NAS) messages is also included.

An Authentication Server Function (AUSF) is responsible for verifying the identity of a subscriber, validating their subscription data, and determining the appropriate security context for the subscriber. One of the primary functions of the AUSF is to support 5G authentication and authorization procedures. When a subscriber attempts to connect to the 5G network, the AUSF plays a key role in verifying their identity and ensuring that they have the proper authorization to access the network.

The Access and Mobility Management Functions (AMF) in 5G NR may be responsible, for example, for termination of RAN control protocol (CP) over N2 interface, termination of NAS over N1 interface, NAS ciphering and integrity protection, registration management, connection management, reachability management, mobility management, lawful intercept for AMF events and interface to LI System, provide transport for SM messages between UE and SMF, transparent proxy for routing SM messages, Access Authentication and Access Authorization, provide transport for SMS messages between UE and SMSF, and Security Anchor Functionality (SEAF). It interacts with the AUSF and the UE, receives the intermediate key that was established as a result of the UE authentication process. In the case of USIM based authentication, the AMF retrieves the security material from the AUSF. There are also other tasks for the AMF defined in 5G standardization.

User plane functions (UPF) in 5G NR are the functions of 5G NR UPF node. Some examples of those functions are to provide an anchor point for Intra-/Inter-RAT mobility (when applicable). an external PDU Session point of interconnect to Data Network, packet routing and forwarding, packet inspection, user plane part of policy rule enforcement, e.g. gating, redirection, traffic steering, lawful intercept (UP collection), traffic usage reporting, QoS handling for user plane, e.g. UL/DL rate enforcement, reflective QoS marking in DL, uplink traffic verification, transport level packet marking in the uplink and downlink, downlink packet buffering and downlink data notification triggering, sending and forwarding of one or more "end marker" to the source NG-RAN node, etc.

5G NR Session Management Function (SMF) of 5G NR SMF hosts, among other things, session Management, UE IP address allocation and management, and selection and control of user plane function. The SMF also configures traffic steering at UPF to route traffic to proper destination and is a control part of policy enforcement and QoS and handles downlink data notifications.

In addition to those mentioned above, the 5G system architecture also comprises, among other things, the following network functions (NF) depicted as blocks in Figs. 2B and 2C: Data Network (DN), e.g. operator services, Internet access or 3^{rd} party services; Unstructured Data Storage Function (UDSF); Network Exposure Function (NEF); Network Repository Function (NRF); Network Slice Admission Control Function (NSACF); Network Slice-specific and SNPN Authentication and Authorization Function (NSSAAF); Network Slice Selection Function (NSSF); Policy Control Function (PCF); Unified Data Management (UDM); Unified Data Repository (UDR); UE radio Capability Management Function (UCMF); Application Function (AF); Edge Application Server Discovery Function (EASDF); and Service Communication Proxy (SCP).

Figs. 2B and 2C also depict some interfaces N1, N2, ... between different entities of the 5G system architecture.

The reports which the system will provide during the progress of the methodology may be structured based upon the following principles. They are created upon documented 3GPP procedures i.e. chapter structures in 3GPP documents, organized according to 3GPP based network architectural and service structures, triggered based upon 3GPP procedures, and parametrized according to 3GPP terminology (e.g. numbering, addressing and identification).

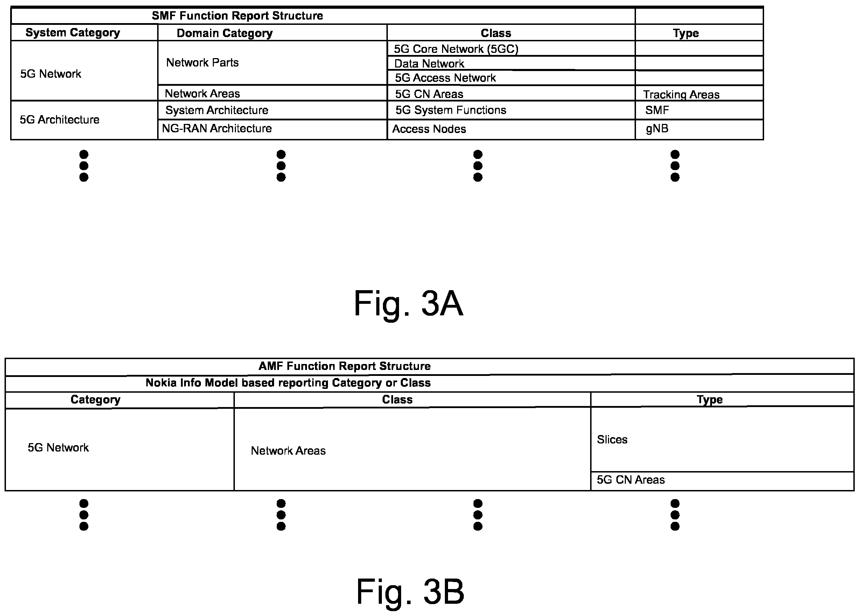

An overview of a vendor agnostic data report is illustrated as a table in Figs. 3A and 3B, in accordance with an embodiment. It should be noted that these figures only show how the report structure is organized but the contents of all possible rows and column, which are based on 3GPP standardization, are not shown in detail.

The tables in question are representing a part of a vendor agnostic report from a 5G network.

The principles presented in this specification are, however, not limited to vendor agnostic reports from 5G, also 4G and 5G NSA, 6G vendor agnostic reporting may be covered using the same principles/methods.

In the following, some principles for report identification will be described.

An identification method of 5G vendor agnostic reporting may be defined that is based upon chapter structures in 3GPP 5G related architectural specifications.

The identification method for any report may be such that for a 3GPP specification document used in the construction of the report, chapter headings are used as a base for vendor agnostic report names and chapter numbers are used as a base for vendor agnostic report IDs.

For example, naming and ID setting of a system level report related to 'Service Request' procedure defined in TS 23.502 chapter 4.2.3 may be as follows:
Report Name: Service Request
Report ID: 402030000.

The report ID is constructed so that the elements of the chapter number have been added with an extra '0', wherein the chapter 4.2.3 becomes 402030. Moreover, a constant length may be used for the report ID, wherein some additional zeros have been added at the end so that the total length of the report ID becomes the determined length, in this example 9 digits. However, the length may be shorter or longer than 9 digits in different implementations.

Identification of network function level reports may be based upon architectural or session handling 3GPP specifications.

For example, naming and ID setting of a function level report related to 'UE Initial Access' procedure defined in TS 38.401 chapter 8.1 may be as follows:
Report Name: UE initial access
Report ID: 801000000.

The report ID is constructed so that the elements of the chapter number have been added with an extra '0', wherein the chapter 8.1 becomes 801000000. Moreover, a constant length may be used for the report ID, wherein an additional zero has been added at the end so that the total length of the report ID becomes the determined length, in this example 9 digits. However, the length may be shorter or longer than 9 digits in different implementations.

Identification of NG-RAN reports may be performed according to 3GPP TS 38.300 and TS 38.401 i.e. NG-RAN architectural descriptions. For example, TS 38.401 NG-RAN Architectural Description" provides identification of reporting related to UE access to NG-RAN, UE release from NG-RAN (RRC state transition to RRC_IDLE), UE connection suspension from NG-RAN (RRC state transition to RRC_INACTIVE), UE RRC_ACTIVE state mobility under same gNB (Intra gNB CU mobility), and UE connection re-establishment to NG-RAN without mobility.

Another example is TS 38.300 'NR; NR and NG-RAN Overall Description". This specification provides identification of service resource additions for a UE with an existing connection to NG-RAN (PDU Session Resource setup), service resource releases without releasing the UE connection to NG-RAN (PDU Session Resource setup), UE RRC_ACTIVE state mobility between two gNBs using Xn HO, UE RRC_ACTIVE state mobility between two gNBs using N2 HO, UE RRC_ACTIVE state mobility to EPS using N26 interface, UE RRC INACTIVE state mobility under same gNB (RNA Update without UE Context Relocation), UE RRC_INACTIVE state mobility different gNB (RNA Update with UE Context Relocation, and UE connection re-establishment to NG-RAN with mobility.

Identification of SMF reports may be performed according to 3GPP TS 29.502 i.e. 'Session Management Services'. These reports may indicate SM Context Creation with or without I-UPF, SM Context Modification with or without I-UPF, with I-UPF change, and SM Context Release.

Identification of AMF reports may be performed according to 3GPP TS 29.518 i.e. '5G System; Access and Mobility Management Services'. These reports may indicate UE Context Creation, UE Context Modification, and UE Context Release.

Identification of system level reports may be performed according to 3GPP TS 23.502 i.e. 'Procedures for the 5G System (5GS)'. These reports may indicate registration, connection or mobility management related operations:
- registration,
- de-registration,
- service request, and
- access network release (AN Release).

These reports may further indicate PDU Session Management related operations:
- PDU Session Establishment,
- PDU Session Modification, and
- PDU session Release.

The following handover related operations may also be indicated by system level reports:
- Xn based Inter gNB Handover,
- N2 based Inter gNB Handover, and
- Interworking with EPC: 5GS to EPC Inter System Handover

The specific services VoNR and Fallback to EPC may also be part of the system level reports.

In the following, the Principle B. Report Organization, is shortly discussed.

The reporting structures are organized and reporting parameters are set according to created info models. A structurized approach is used to organize the vendor agnostic reporting content. This approach is based upon created system and network function level info models. All info models may utilize a common Service Model.

In accordance with an embodiment, the common service model for all functions used in all created info models may, for example, include the following network function specific reporting, for example Radio Specific (NG-RAN) and/or Core Specific (SMF and AMF).

For the network function specific reporting, a scope of created info models comprises responsibilities in monitored network, roles in network architecture and UE Management, offered visibility in identification of a subscriber and/or a user, needed identifications for the function, available network reference points for the function, created user associations in available reference points, and procedures available for the function.

In addition to the common structures for any function info models the Radio Specific part may include logical parts identified according to, for example, 3GPP 38.300 defined structures, and references to subscriber data content by 3GPP TS 32.423.

In addition to the common structures for any 5G network function (NF) info models, for example the Core Specific SMF and/or AMF part may include service based functions covered in the reporting, for example 3GPP TS 29.502.

In addition to the common structures for used function info models the network level reports may include a type of network, a type of network access, system functions that participated in creating the network level report, and a type of used Radio Access Network.

It should be noted that the info model is also called as a data model in this specification.

There exists a plurality of vendor specific systems (also called as vendor specific networks in this specification), which provide access of user equipment to the wireless communication system of the vendors. In other words, the vendor specific systems provide functionalities of the 4G and/or the 5G and/or 6G, both the core network and the radio access network.

User equipment and the vendor specific network communicate with each other by performing different kinds of signalling between the elements such as UE and gNB in the form of sending and receiving different kinds of messages. The structure and amount of the messages exchanged between the UE and gNB depend on the status the UE is at a time. For example, when the UE is switched on, a registration signalling may be performed wherein the UE is registered to the network and can then send and receive calls etc. When the UE moves so that the connection to the network is changed to another gNB, a so-called hand over (HO) maybe performed using signalling dedicated for that purpose. These are only two examples of signalling situations but there are a lot of other signalling procedures between different elements existing in vendor specific networks.

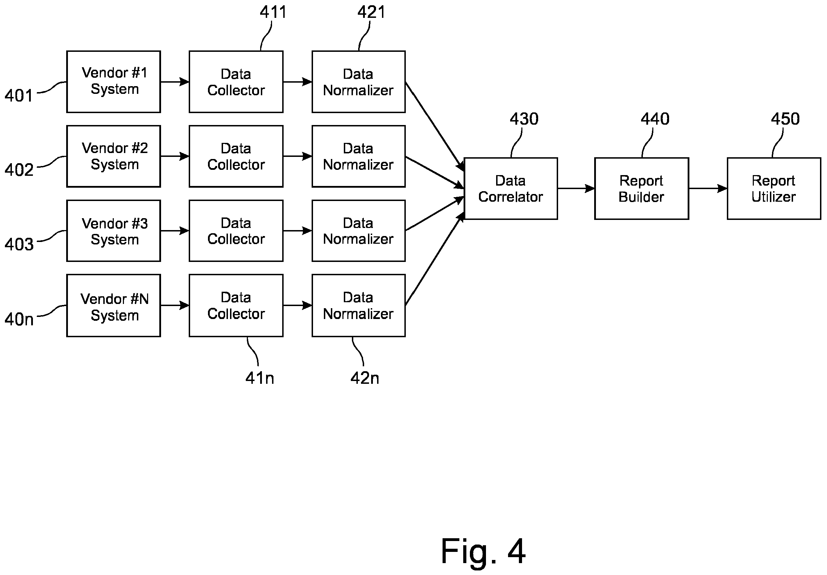

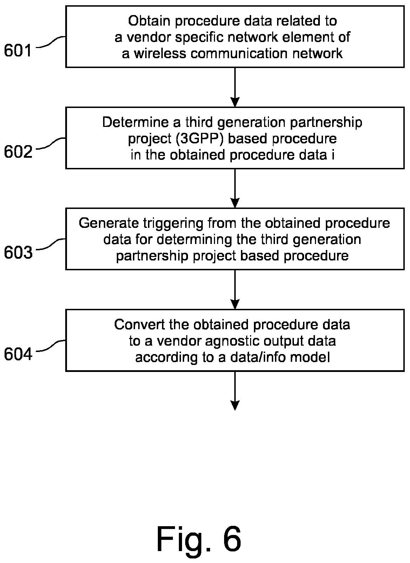

In the following an example embodiment of collecting vendor specific data and converting it to vendor agnostic data and corresponding reports will be discussed in more detail with reference to the simplified block diagram of Fig. 4 and the flow diagram of Fig. 6.

In Fig. 4 some vendor specific systems are illustrated with blocks 401, 402, ..., 40n. A data collector 411, 412, ..., 41n has access to the signalling performed by the network elements (gNBs) and UEs so that the data collector 411, 412, ..., 41n can collect and record the communication information carried by the signals transmitted between different entities in the vendor specific networks. The data collector 411, 412, ..., 41n may also be called as a data tracer because it collects some "traces" of the signalling. In the embodiment of Fig. 4 there is one data collector 411, 412, ..., 41n for each vendor specific network but according to another embodiment there is one data collector in which interpretation of signalling of different vendor specific networks is provided.

The data collector 411, 412, ..., 41n has instructions for interpretation of signalling procedures and/or vendor specific data content by which the data collector 411, 412, ..., 41n is able to determine which kind of signalling procedure has been performed between the entities of the wireless network such as 5G. For example, when the UE and gNB perform the registration procedure, the data collector 411, 412, ..., 41n has instructions to reveal from the signalling and/or vendor specific data content that information carried by the signals during the registration correspond with the registration procedure of that vendor specific network. The instructions may be, for example, in the form of a table containing information of messages transmitted during the signalling procedure in question. There may be separate information for different interfaces such as the interface between gNB and UE and the interface between gNB and the core network (e.g. 5GC). It is thus possible that the data collector 411, 412, ..., 41n examines separately signalling procedure of both interfaces.

Data from the vendor specific data collectors 411, 412, ..., 41n is provided to vendor specific data normalizers 421, 422, ..., 42n in which the collected data is normalized so that, for example, terminology and data types used in the reports will be the same irrespective of the vendor the data is collected from. Furthermore, the data is also associated with a reference to the corresponding standard document. To achieve this, the vendor specific data normalizers 421, 422, ..., 42n have instructions for interpretation of terminology and data fields of the reports to convert to the common terminology and to provide indication of the standard the data is related to. Therefore, the normalized data can be examined and compared with data from different vendors for e.g. analyzing purposes.

In accordance with an embodiment, the apparatus may also comprise a data correlator 430 for correlating different normalized data from different network elements but which data are related to the same procedure of the network. For example, vendor specific data regarding to a certain procedure, such as UE registration to the network, has been collected from both the RAN and 5GC. The RAN and 5GC may also be of different vendors. The data collector 430 examines different normalized data to find out which data relate to the same event, e.g. initial UE access procedure, UE registration procedure, SM context creation procedure, etc.

There may also be a report builder 440 which forms one or more reports from the collected, and optionally correlated, data.

In accordance with an embodiment, there may also be a report utilizer 450 for performing one or more tasks based on the vendor agnostic report(s) from the report builder 440. These tasks may depend on the implementation. For example, anomality detection, machine learning, event triggering, key performance index (KPI) calculation, etc.

In accordance with an embodiment, the result of anomaly detection and/or the other above-mentioned tasks can be used to automatically re-configure the network to enhance its performance.

In the following, the triggering of the vendor specific report is described in more detail.

It is assumed that the vendor specific data collectors 411, ..., 41n trace data traffic at different network elements. For example, there may be a data collector which traces data signalling at the AMF, another data collector which traces data signalling between a UE and gNB, yet another data collector which traces data signalling at the SMF. When a certain 3GPP procedure has been detected, for example the UE registration has proceeded to the end of the registration signalling, the data collector(s) which has/have traced that signalling, detect the end of the procedure and that moment can be regarded as a triggering event for beginning to generate a vendor specific report. This report is then forwarded to the data normalizer to produce the normalized report.

If the network event fails for some reason and if the data collector detects the moment of failure, it may also at this kind of situation use that detection of failure as a trigger for generation of the report, therein the report can be used to show the events before the failure has been detected.

It should also be noted that the triggering detection and/or collected data may come from a vendor specific interface or a standard interface according to e.g. 3GPP TS 32.422, wherein the vendor system may perform the detection of the triggering event.

The optional data correlator 430 may then be used to find out which normalized reports have been generated from the same network event.

In other words, the triggering of reports may be done upon standard based signaling scenarios for used procedures. There may be separate but synchronized signaling scenarios used for each network function level procedure as well as for the system level procedures. For network level reports the triggering of reports are based upon identifying each defined function level procedure in collected data. For system level reports the triggering may be based upon correlation of enriched network function reports based upon correlation keys found in the function level reports.

Function specific signaling scenarios may be written in table format. The sequence in a table represents the start and end points of a reported successful procedure. In a case a procedure fails the reporting may show the last point in the table i.e. the last point in the sequence.

There are different reporting triggers, which are based upon 3GPP defined procedures. To mention just a few of them, there may be NG-RAN based reporting triggers, SMF based reporting triggers, AMF based reporting triggers, etc.

A method has been created to provide system level reports upon correlation of function level reports.

Creation of system level reports may be done in e.g. two stages. First, system procedure triggering logic is performed for enriching the used network function level reports, and next, system procedure correlation logic is performed based upon correlation keys found in network function level reports.

In accordance with an embodiment, the system procedure triggering logic is designed upon specific NAS or access-stratum (AS) messages and related content. The logic takes also into account the different UE state possibilities in 5GC and NG-RAN. This may be needed as the execution of the system procedures may be different in different UE states as well as the visibility of the triggers are affected by the UE state in NG-RAN.

The end result is an enrichment of the related system procedure to a network function level report based upon the triggering logic.

System procedure correlation logic may be designed upon correlation keys found in the function level reports such as a subscriber identification key: e.g. 5G-TMSI; a service identification key: e.g. PDU Session ID; a network usage key: e.g. System Procedure ID.

The above keys may be needed with the described method to any system level correlation.

In addition, the following keys may be needed in SMF - NG-RAN correlation: UE transport network layer association (TNLA) in N3 interface: e.g. Tunnel Endpoint IDs.

Additional correlation keys might also be used depending on other correlation use cases.

The correlation method according to an embodiment is based on a comparison of defined correlation keys in two or more network function reports. If the correlation keys are identical in both reports a correlation takes place. The end result is a system level report of two or more correlated network function reports.

In accordance with an embodiment, there are two system level correlations available: AMF - NG-RAN and SMF - NG-RAN.

The available system level reports are related to available system procedures.

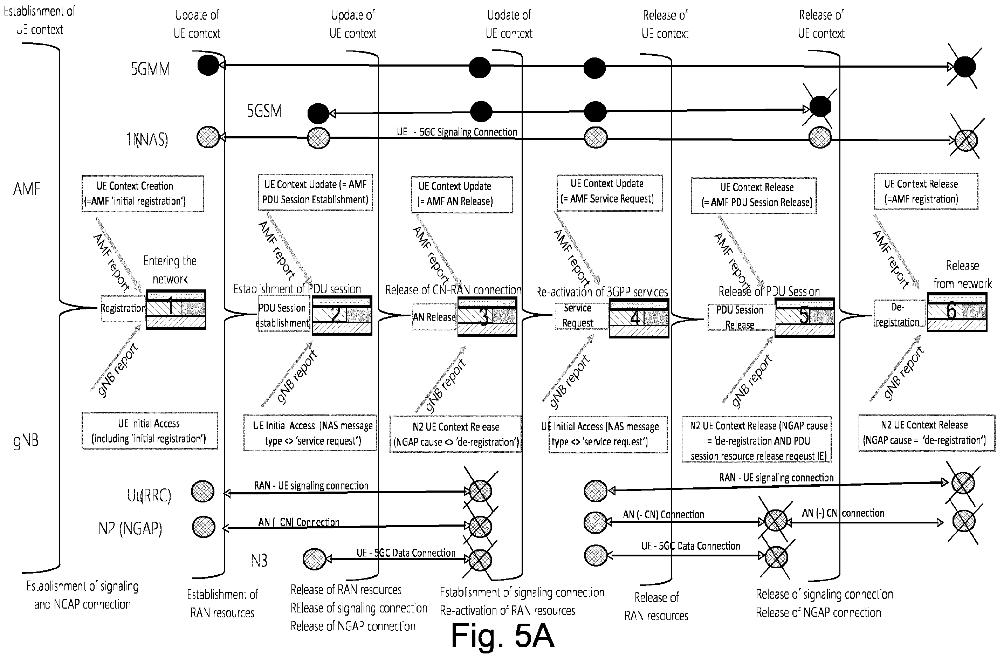

An example of AMF - NG-RAN correlation method for different procedures is illustrated in Fig. 5A.

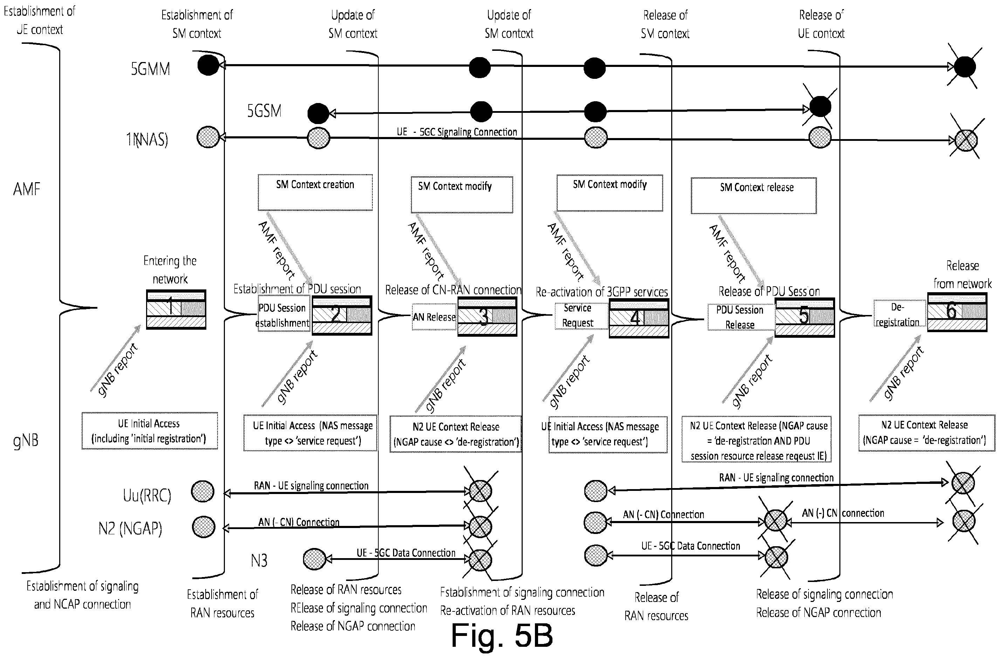

An example of SMF - NG-RAN correlation method for different procedures is illustrated in Fig. 5B.

In Figs. 5A and 5B the leftmost filled circles and the leftmost hashed circles without lines drawn across the circles illustrate a start (a beginning) of a procedure and the filled circles and hashed circles with lines drawn across the circles illustrate an end of the procedure. The lines between the circles illustrate (signaling) connections between network entities.

In the following, the flow diagram of Fig. 6 will be explained in more detail.

At step 601, procedure data related to a vendor specific network element of a wireless communication network is obtained.

At step 602, a third generation partnership project (3GPP) based procedure in the obtained procedure data is determined.

At step 603, triggering from the obtained procedure data is generated for determining the third generation partnership project based procedure.

At step 604, the obtained procedure data is converted to a vendor agnostic output data according to a data/info model.

In the following some implementation alternatives are described.

Info models are used in setting the logic for reporting parameters.

Each defined reporting parameter is mapped to a given structure in the info model(s).

Reporting parameters are based upon descriptions in various 3GPP system architecture documents.

For example, the following reporting NG-RAN based categories and types are participating in setting vendor agnostic NG-RAN parameters.

The 3GPP references are seen in general in the list and in more detail in the illustrated report.
- 5G Architecture
- NG-RAN Architecture -> 38.300; TS 38.401
- 5G Services -> TS 23.501
- 5G UE Management
- 5GC UE Management -> TS 23.501; TS 24.501
- 5G AN UE Management -> TS 38.300
- 5G Identifiers
- 5G User -> TS 23.501; TS 38.413
- 5G Service -> TS 23.501; TS 38.413
- 5GC -> TS 23.501
- 5G AN
- 5G Access point -> TS 38.300
- 5G Operating Band -> TS 38.104
- 5G UE Associations
- 5G AMF -> TS 23.501
- 5G AN-UPF -> TS 29.281
- 5G AN
- 5G AN-AMF -> TS 38.401
- 5G AN Internal -> TS 38.401
- 5G AN - UE -> TS 38.300
- 5G System Reference Points
- 5G System Reference points - UE-CN -> TS 23.501
- 5G System Reference points - CN-AN -> TS 23.501
- 5G System Reference points - AN -> TS 38.401
- 5G Procedures

For example, the following SMF based reporting categories and types are participating in setting vendor agnostic SMF parameters.
- 5G Architecture
- 5GC Architecture -> TS 23.501
- 5G Services -> TS 23.501
- 5G UE Management
- 5GC UE Management -> TS 23.501; TS 24.501
- 5G Identifiers
- 5G Subscriber -> TS 23.003
- 5G Service -> TS 23.501
- 5GC -> TS 23.501
- 5G UE Associations
- 5G AMF -> TS 23.501
- 5G AN-UPF -> TS 29.281
- 5G AN-AMF -> TS 38.401
- 5G Lower Level Functions
- AMF offered functions -> TS 23.501
- SMF offered functions -> TS 23.501
- 5G System Reference Points
- 5G System Reference points - UE-CN -> TS 23.501
- 5G System Reference points - core network (CN) -> TS 23.501
- 5G System Reference points - CN-AN -> TS 23.501
- 5G Procedures

For example, the following AMF based reporting categories and types are participating in setting vendor agnostic AMF parameters.
- 5G Architecture
- 5GC Architecture -> TS 23.501
- 5G Services -> TS 23.501
- 5G UE Management
- 5GC UE Management -> TS 23.501; TS 24.501
- 5G Identifiers
- 5G Subscriber -> TS 23.003
- 5G Service -> TS 23.501
- 5GC -> TS 23.501
- 5G UE Associations
- 5G AMF -> TS 23.501
- 5G AN-AMF -> TS 38.401
- 5G Lower Level Functions
- AMF offered functions -> TS 23.501
- SMF offered functions -> TS 23.501
- 5G System Reference Points
- 5G System Reference points - UE-CN -> TS 23.501
- 5G System Reference points - CN -> TS 23.501
- 5G System Reference points - CN-AN -> TS 23.501
- 5G Procedures

For example, the following system reporting categories and types are participating in setting vendor agnostic system parameters. The ones provided by NG-RAN or SMF function reports as shown above.
- 5G Network
- Network Type -> TS 23.003

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The (e/g)NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user equipments. The antenna unit may comprise a plurality of antennas or antenna elements. The (e/g)NodeB is further connected to core network 109 (CN or next generation core NGC). Depending on the system, the counterpart on the CN side can be a serving gateway (S-GW, routing and forwarding user data packets), packet data network gateway (P-GW), for providing connectivity of user equipments (Ues) to external packet data networks, or mobile management entity (MME), etc. The CN may comprise network entities or nodes that may be referred to management entities. Examples of the network entities comprise at least an Access management Function (AMF).

The user equipment (also called a user device, a user terminal, a terminal device, a wireless device, a mobile station (MS) etc.) illustrates one type of an apparatus to which resources on the air interface are allocated and assigned, and thus any feature described herein with a user equipment may be implemented with a corresponding network apparatus, such as a relay node, an eNB, and an gNB. An example of such a relay node is a layer 3 relay (self-backhauling relay) towards the base station.

The user equipment typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user equipment may also be a nearly exclusive uplink only device, of which an example is a camera or video camera loading images or video clips to a network. A user equipment may also be a device having capability to operate in Internet of Things (IoT) network which is a scenario in which objects are provided with the ability to transfer data over a network without requiring human-to-human or human-to-computer interaction. The user equipment may also utilize cloud. In some applications, a user equipment may comprise a small portable device with radio parts (such as a watch, earphones or eyeglasses) and the computation is carried out in the cloud. The user equipment (or in some embodiments a layer 3 relay node) is configured to perform one or more of user equipment functionalities. The user equipment may also be called a subscriber unit, mobile station, remote terminal, access terminal, user terminal or user equipment (UE) just to mention but a few names or apparatuses.

A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs) and processors based on multi-core processor architecture, as non-limiting examples.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays (FPGA), application specific circuits (ASIC), signal processing devices and other devices. References to computer readable program code means, computer program, computer instructions, computer code etc. should be understood to express software for a programmable processor firmware such as the programmable content of a hardware device as instructions for a processor or configured or configuration settings for a fixed function device, gate array, programmable logic device, etc.

Although the above examples describe embodiments of the invention operating within a wireless device or a gNB, it would be appreciated that the invention as described above may be implemented as a part of any apparatus comprising a circuitry in which radio frequency signals are transmitted and/or received. Thus, for example, embodiments of the invention may be implemented in a mobile phone, in a base station, in a computer such as a desktop computer or a tablet computer comprising radio frequency communication means (e.g. wireless local area network, cellular radio, etc.).

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules, field-programmable gate arrays (FPGA), application specific integrated circuits (ASIC), microcontrollers, microprocessors, a combination of such modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, graphic design system II (GDSII), or the like) may be transmitted to a semiconductor fabrication facility or "fab" for fabrication.

As used in this application, the term "circuitry" may refer to one or more or all of the following:
(a) hardware-only circuit implementations (such as implementations in only analogue and/or digital circuitry) and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

## Claims

1. An apparatus comprising :
means for obtaining procedure data related to a vendor specific network element of a wireless communication network;
means for determining a third generation partnership project (3GPP) based procedure in the obtained procedure data;
means for generating triggering from the obtained procedure data for determining the third generation partnership project based procedure; and
means for converting the obtained procedure data to a vendor agnostic output data according to a data model.

2. The apparatus according to claim 1 further comprising:
means for tracing signaling at the vendor specific network element to obtain the procedure data.

3. The apparatus according to claim 1 further comprising:
means for receiving the procedure data from the vendor specific network element.

4. The apparatus according to any of claims 1 to 3 further:
means for determining a start of procedure and an end of procedure in the procedure data.

5. The apparatus according to claim 4 further comprising:
means for generating triggering from the obtained procedure data when the end of procedure has been determined.

6. The apparatus according to claim 5, wherein the end of procedure is one of the following:
a success, or
a failure, or
otherwise abnormal ending.

7. The apparatus according to any of claims 1 to 6 further comprising:
means for providing mapping from the vendor specific procedure data to the data model.

8. The apparatus according to any of claims 1 to 7 further comprising:
means for utilizing the vendor agnostic output data for at least one of the following:
- anomality detection;
- machine learning;
- event triggering;
- key performance index calculation;
- correlation over the network functions;
- correlation within a network function;
- troubleshooting;
- network analyzing.

9. The apparatus according to any of claims 1 to 8, wherein the apparatus is associated with a network element and configured to communicate with the network element.

10. A computer-implemented method comprising:
obtaining procedure data related to a vendor specific network element of a wireless communication network;
determining a third generation partnership project (3GPP) based procedure in the obtained procedure data;
generating triggering from the obtained procedure data for determining the third generation partnership project based procedure; and
converting the obtained procedure data to a vendor agnostic output data according to a data model.

11. The computer-implemented method according to claim 10 further comprising:
tracing signaling at the vendor specific network element to obtain the procedure data.

12. The computer-implemented method according to claim 10 further comprising:
receiving the procedure data from the vendor specific network element.

13. The computer-implemented method according to any of claims 10 to 12 further comprising:
determining a start of procedure and an end of procedure in the procedure data.

14. A computer program product including computer program code configured to, with at least one processor, cause an apparatus to perform at least the following:
obtaining procedure data related to a vendor specific network element of a wireless communication network;
determining a third generation partnership project (3GPP) based procedure in the obtained procedure data;
generating triggering from the obtained procedure data for determining the third generation partnership project based procedure; and
converting the obtained procedure data to a vendor agnostic output data according to a data model.

15. A computer-readable storage media including computer program code configured to, with at least one processor, cause an apparatus to perform at least the following:
obtaining procedure data related to a vendor specific network element of a wireless communication network;
determining a third generation partnership project (3GPP) based procedure in the obtained procedure data;
generating triggering from the obtained procedure data for determining the third generation partnership project based procedure; and
converting the obtained procedure data to a vendor agnostic output data according to a data model.
